(19) Europäisches Patentamt
European Patent Office
Office européen des brevets

(11) **EP 2 226 930 B1**

(12) **FASCICULE DE BREVET EUROPEEN**

(45) Date de publication et mention
de la délivrance du brevet:
**13.05.2015 Bulletin 2015/20**

(51) Int Cl.:
*F04B 49/06* (2006.01)     *H02P 25/04* (2006.01)
*H02P 23/00* (2006.01)     *H02P 29/00* (2006.01)

(21) Numéro de dépôt: **09290163.6**

(22) Date de dépôt: **06.03.2009**

(54) **Procédé de régulation d'un moteur ayant plusieurs vitesses de fonctionnement**

Verfahren zur Regulierung eines Motors mit mehreren Funktionsgeschwindigkeiten

Method for regulating a motor with various operating speeds

(84) Etats contractants désignés:
**DE FR GB IT**

(43) Date de publication de la demande:
**08.09.2010 Bulletin 2010/36**

(73) Titulaire: **Pompes Salmson**
**78400 Chatou (FR)**

(72) Inventeurs:
• **Kernours, Michel**
**35270 Mondevert (FR)**
• **Maes, Sylvère**
**53210 Louvigne (FR)**
• **Lemee, Anthony**
**5300 Laval (FR)**

(74) Mandataire: **Hirsch & Associés**
**137, rue de l'Université**
**75007 Paris (FR)**

(56) Documents cités:
EP-A- 0 091 869     EP-A- 0 629 037
FR-A- 2 524 578     JP-A- 10 023 776
JP-A- 11 311 196    JP-A- 2007 037 292

**Description**

La présente invention concerne un procédé de régulation d'un moteur ayant plusieurs vitesses de fonctionnement.

Pour assurer un fonctionnement optimal selon le contexte d'utilisation d'un moteur, il est possible de prévoir plusieurs vitesses nominales de fonctionnement du moteur. Le changement de vitesses de fonctionnement peut être assuré par un procédé de régulation.

De plus, la vitesse d'un moteur est fonction de sa charge. Une régulation peut alors opérer des changements de vitesses de fonctionnement afin d'adapter ces dernières à la charge du moteur. Un régulateur s'acquitte de cette opération.

Le document FR-A-2 524 578 décrit une pompe de circulation pour des installations de chauffage dont le moteur peut être réglé par palier, par commutation des enroulements, sur au moins deux vitesses de rotation prédéterminées. La vitesse minimale est prévue pour le fonctionnement de l'installation en régime économique et chaque vitesse supérieure est associée à un autre régime de fonctionnement de l'installation. En partant de l'une des vitesses supérieures prédéterminée, la vitesse du moteur peut être réglée en continu en direction de la vitesse immédiatement inférieure, sur une vitesse de travail qui est adaptée aux conditions de fonctionnement respectives de l'installation.

Le document JP-A-11311196 décrit un système électronique permettant la variation de la vitesse du moteur à l'aide d'un contrôleur de vitesse. Le système comporte en outre un organe de détection de la température de l'enroulement primaire du moteur. Le contrôleur de vitesse compare la température mesurée avec une température de consigne acceptable. Si la température mesurée est plus haute que la température acceptable, le contrôleur limite la vitesse du moteur.

Le document EP-A-0 629 037 décrit un procédé de régulation de l'alimentation d'un moteur électrique asynchrone monophasé du type à phase principale et à phase auxiliaire permanente. Le procédé consiste à mesurer l'angle de déphasage d'une seule desdites phases et à réguler l'alimentation dudit moteur en fonction de la valeur de l'angle de déphasage ainsi mesuré.

Le document JP-A-2007 037292 décrit un moteur muni d'un entraînement et commandé par une unité électronique de commande. Lorsque la température de l'entraînement est augmentée par la chaleur dégagée par le moteur et dépasse une première valeur prédéterminée, la valeur de commande de la vitesse de rotation est abaissée afin de diminuer la température de l'entraînement. Lorsque la température atteint une valeur déterminée, la valeur de commande redevient normale. Entre temps, la valeur de commande est déterminée pour abaisser la température de l'entraînement.

Toutefois la régulation de la vitesse de fonctionnement du moteur peut être dégradée du fait de variations des conditions de fonctionnement du moteur. Il y a donc un besoin pour une régulation du moteur qui soit plus performante.

Pour cela, l'invention propose un procédé de régulation d'un moteur ayant plusieurs vitesses de fonctionnement, la vitesse de fonctionnement étant déterminée selon un critère de changement de vitesse, le procédé comprenant une étape de correction du critère de changement de vitesse en fonction d'au moins un paramètre du groupe comprenant la tension, la température et la fréquence appliquées au moteur.

Selon une variante, le procédé comprend, avant l'étape de correction, une étape de détermination de la valeur nominale du critère de changement de vitesse dans des conditions nominales de fonctionnement du moteur.

Selon une variante, l'étape de correction est réalisée par adjonction à la valeur nominale du critère de changement de vitesse d'un terme correctif qui est dépendant de la tension, de la température et de la fréquence appliquées au moteur.

Selon une variante, le critère de changement de vitesse est le déphasage entre la tension et le courant d'alimentation du moteur.

Selon une variante, le procédé comprend une étape d'acquisition de la tension, de la température et de la fréquence appliquées au moteur.

Selon une variante, le moteur comprenant une phase principale, l'acquisition de la tension étant réalisée aux bornes de la phase principale.

Selon une variante, le moteur comportant un boîtier de commande du moteur, l'acquisition de la température étant réalisée dans le boîtier de commande.

Selon une variante, le moteur comprenant une phase principale et une phase auxiliaire, le procédé comprenant une étape de régulation de la vitesse du moteur par branchement de la phase principale en série avec tout ou partie de la phase auxiliaire.

Il est également proposé un dispositif de régulation de la vitesse de fonctionnement d'un moteur comprenant une unité de régulation de la vitesse du moteur en fonction d'un critère de changement de vitesse corrigé en fonction de la tension, de la température et de la fréquence appliquées au moteur.

Selon une variante le dispositif comprend en outre des modules d'acquisition de la température, de la fréquence et de la tension appliquées au moteur.

Selon une variante le module d'acquisition de température comprend une résistance variable en fonction de la température.

Il est également proposé un moteur comprenant le dispositif de régulation.

Selon une variante, le moteur comprend un boîtier de commande dans lequel est le dispositif de régulation, le module d'acquisition de la température étant adapté à mesurer la température dans le boîtier de commande.

Selon une variante, le moteur comprend en outre une phase principale, le module d'acquisition de la tension étant adapté à mesurer la tension aux bornes de la phase principale ou la tension du réseau de distribution électrique.

Il est également proposé une pompe de circulation comprenant le moteur.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, Un ensemble de courbes représentant la charge hydraulique en fonction du débit;
- figure 2, Un schéma module des modules électroniques de l'unité de régulation du moteur selon un mode de réalisation.

L'invention se rapporte à un procédé de régulation d'un moteur ayant plusieurs vitesses de fonctionnement, la vitesse de fonctionnement étant déterminée selon un critère de changement de vitesse. Le procédé comprend une étape de correction du critère de changement de vitesse en fonction de paramètres appliqués au moteur. Parmi ceux-ci il est particulièrement intéressant de considérer au moins l'un parmi le groupe comprenant la tension, la température ou la fréquence appliquées au moteur.

Le procédé, faisant ainsi intervenir une étape de correction du critère de changement de vitesse de fonctionnement, permet d'adapter la régulation du moteur aux variations de paramètres. L'étape de correction permet de faire fonctionner le régulateur dans des conditions plus proches de la réalité. Le procédé de régulation est donc plus performant.

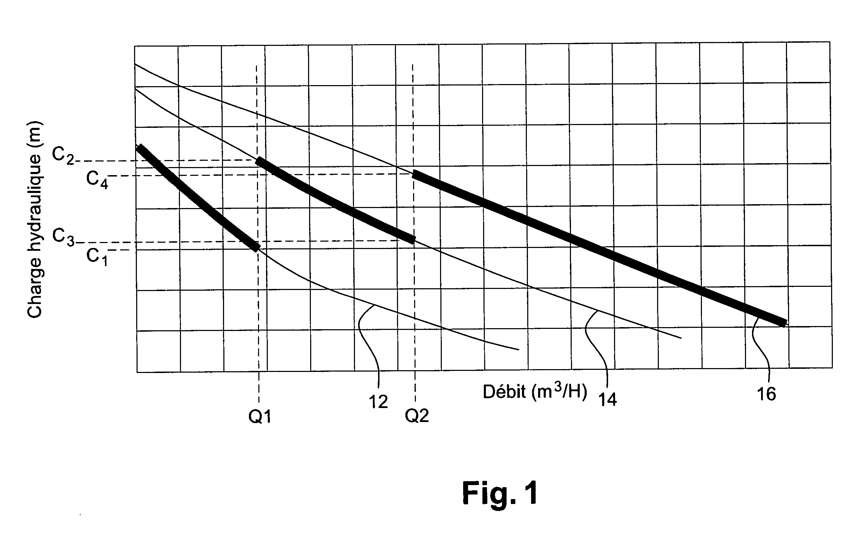

La figure 1 décrit un ensemble de courbes représentant la charge hydraulique en fonction du débit. Le moteur est par exemple, mais pas exclusivement, un moteur tel que ceux utilisés dans les pompes pour la circulation de fluide dans un système de chauffage en particulier pour les systèmes de chauffage domestique.

Le moteur peut comporter plusieurs vitesses de fonctionnement. Ces vitesses de fonctionnement correspondent à une combinaison de la phase principale avec les phases électriques auxiliaires du moteur. Pour chaque combinaison de phases le moteur fonctionne selon une plage de vitesses. A un instant donné, le moteur fonctionne à une vitesse de la plage de vitesses sélectionnée. Le changement de vitesse de fonctionnement est réalisé par changement de combinaison de phases électriques. Plus un moteur comprend de vitesses de fonctionnement, plus le moteur peut adapter sa vitesse de fonctionnement au débit sollicité avec une charge hydraulique convenable. Le choix d'une vitesse de fonctionnement adapté au débit permet de faire fonctionner le moteur dans des conditions optimales du point de vue de la consommation électrique. Le nombre des possibilités de changement de vitesses de fonctionnement augmente avec le nombre de ces vitesses.

La figure 1 comprend, à titre d'exemple, trois courbes. Chaque courbe représente une vitesse de fonctionnement du moteur différente. Les vitesses de fonctionnement 1, 2 et 3 sont respectivement représentés par la courbe 12, 14, 16. Chaque courbe 12, 14 et 16 possède une intersection avec une ligne de débit Q1 et Q2. Les lignes de débit Q1 et Q2 coupent respectivement les courbes 12 et 14 et les courbes 14 et 16 en deux points. Chacune des lignes Q1 et Q2 représente un débit particulier de fonctionnement appelé seuil. Dans l'exemple de la figure 1 les trois courbes correspondent aux trois plages de débit [0, Q1], [Q1, Q2] et [Q2, débit maximum atteint par le moteur]. Chaque seuil indique pour un débit donné la courbe selon laquelle le moteur fonctionne. Les seuils délimitent une transition entre deux vitesses de fonctionnement du moteur.

La transition entre les vitesses de fonctionnement est assurée par un critère de changement de vitesse de fonctionnement. Le critère de changement de vitesse peut par exemple correspondre au déphasage entre la tension et le courant d'alimentation du moteur. Ce déphasage dans la phase principale permet de manière simple de connaître l'état de fonctionnement du moteur. Dans des conditions nominales de fonctionnement, un déphasage particulier correspond à un débit Q particulier. Chaque déphasage est l'image d'un débit. Ainsi, à l'aide du déphasage, il est possible de savoir dans quelle plage de débit de la figure 1 le moteur fonctionne. Le régulateur change de vitesse de fonctionnement du moteur selon que le déphasage correspond à des valeurs de débit supérieures ou inférieures aux valeurs Q1 ou Q2.

En ordonnée du graphique de la figure 1, les points C1, C2, C3 et C4 indiquent la charge hydraulique obtenue pour le débit Q1 ou Q2 selon la vitesse de fonctionnement du moteur. C1 est la charge hydraulique à débit Q1 lorsque le moteur fonctionne selon la courbe 12. C2 est la charge hydraulique à débit Q1 lorsque le moteur fonctionne selon la courbe 14. C3 est la charge hydraulique à débit Q2 lorsque le moteur fonctionne selon la courbe 14. C4 est la charge hydraulique à débit Q2 lorsque le moteur fonctionne selon la courbe 16.

A titre d'exemple de fonctionnement du moteur selon l'invention, le moteur suit une étape de mise en route. Le moteur suit alors la courbe de sa vitesse de fonctionnement 12 à partir de l'origine des abscisses. Toute sollicitation en débit du moteur, inférieur à Q1, évolue selon la courbe 12. Une fois la sollicitation en débit égale à Q1, le critère de changement de vitesse est rempli à ce seuil. La vitesse de fonctionnement 1 du moteur change pour la vitesse de fonctionnement 2 du moteur. Le fonctionnement du moteur suit alors la courbe 14, tant que le débit du moteur est compris entre Q1 et Q2. La transition de la vitesse de fonctionnement 1 à la vitesse de fonctionnement 2, représentée par le passage de la courbe 12 à 14 assure, à l'atteinte du débit seuil Q1, une charge hydraulique qui passe de C1 à C2. Ainsi pour une sollicitation en débit qui augmente, le changement de vitesse de fonctionnement permet d'augmenter la charge hydraulique du moteur. Pour une sollicitation en débit supérieure à Q2 la vitesse de fonctionnement du moteur passe de la vitesse 2 à la vitesse 3. Ce changement est graphiquement représenté par le passage de la courbe 14 à la courbe 16. La charge hydraulique lors de ce changement de vitesse passe de C3 à C4. La figure 1 montre que, à l'atteinte d'un débit seuil, la charge hydraulique après changement de vitesse de fonctionnement, dans le sens des débits croissants, est supérieure à la charge hydraulique avant changement de vitesse de fonctionnement. A l'inverse, pour des changements de vitesse de fonctionnement dans le sens des débits décroissants, la charge hydraulique avant changement de vitesse de fonctionnement est inférieure à la charge hydraulique après changement de vitesse de fonctionnement. Cette variation de la vitesse permet d'adapter la charge hydraulique au débit demandé ce qui permet d'économiser de l'énergie en choisissant la vitesse de fonctionnement la plus adaptée.

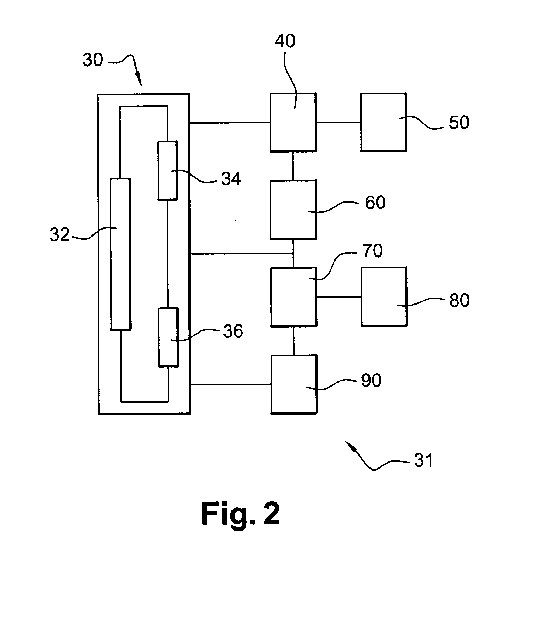

La figure 2 décrit un schéma des modules électroniques de l'unité de régulation du moteur. Le moteur est représenté par le module 30. L'unité 31 de régulation comprend un module 40 de mesure de la phase de la tension et un module 90 de mesure de la phase de l'intensité. L'unité 31 comprend également un module 50 de compensation de tension, un module 60 de starter moteur, un module 70 de limiteur de tension passe bas et un module 80 de régulateur de tension. Ces modules permettent la gestion du fonctionnement général du moteur. Le module 50 permet de compenser le facteur de puissance du moteur. Le module 60 permet de donner le courant nécessaire au moteur asynchrone pour le démarrage. Le module 80 assure la régulation en tension du moteur. Le module 70 permet de passer outre la limitation de tension.

Le moteur 30 comprend une phase principale 32 et des phases auxiliaires 34 et 36. Les différentes vitesses de fonctionnement sont obtenue par la mise en série de la phase principale 32 avec tout ou partie des phases auxiliaires 34 et 36.

L'évaluation de la charge du moteur se fait, par exemple, par observation du déphasage entre l'intensité et la tension du courant de la phase principale 32. Un intérêt étant la simplicité de mise en place de cette mesure. Le fait de mesurer le déphasage aux bornes de la phase principale 32 permet donc d'effectuer la mesure indépendamment des conditions d'utilisation du moteur et en particulier quelque soit sa vitesse de fonctionnement 1, 2 ou 3. Cette mesure implique le module 40 qui mesure la phase de la tension. La mesure de la phase de la tension peut également être effectuée aux bornes du réseau de distribution électrique. Le module 90 mesure la phase de l'intensité. La différence donne le déphasage.

La mesure de la température quant à elle peut être réalisée dans un boîtier de commande du moteur comprenant l'unité de régulation du moteur. L'intérêt de l'acquisition de la température dans ce boîtier est d'obtenir une mesure la plus fidèle possible de la température subie par le moteur. La température dans ce boîtier varie aussi bien en fonction des conditions extérieures qu'en fonction du fonctionnement du moteur. Il est avantageux d'acquérir la température grâce à une résistance variable. La mesure ainsi effectuée est simple et peu coûteuse.

Le procédé de régulation de fonctionnement du moteur est réalisé par changement de vitesse de fonctionnement selon un critère de changement de vitesse qui peut être le déphasage entre la tension et le courant d'alimentation du moteur. Le critère de changement de vitesse de fonctionnement reflète l'atteinte de débits seuils. Le procédé comprend en particulier la correction du critère en fonction de paramètres appliqués au moteur. Ces paramètres pouvant subir des variations, le procédé permet alors d'adapter le critère de changement de vitesse pour continuer à refléter l'atteinte de débits seuils.

A titre d'exemple ces paramètres peuvent comprendre la tension d'alimentation du moteur. La tension peut varier en raison, par exemple, des fluctuations des réseaux de distribution électrique.

Egalement, ces paramètres peuvent comprendre la fréquence de la tension d'alimentation.

A titre d'exemple encore, ces paramètres peuvent comprendre la température du moteur. Cette température peut varier, entre autres, selon les conditions extérieures au moteur. Egalement, la température peut varier selon l'échauffement du moteur lui-même qui se produit en fonction de la sollicitation du moteur ou dues à des variations de température du fluide circulé. En outre, parmi les paramètres, la température extérieure peut être prise en compte.

La tension et la fréquence ne sont pas toujours égales à leur valeur nominale. En outre, la température du moteur peut subir des variations. La variation de ces paramètres fait varier la correspondance entre le critère de changement de vitesse et le débit effectivement procuré par le moteur. A cause de la variation de ces paramètres, le critère de changement ne reflète plus le débit effectivement procuré par le moteur. Ainsi, si le critère de changement de vitesse est le déphasage entre la tension et le courant, alors, pour un même déphasage mesuré, le débit atteint peut être différent selon les paramètres de fonctionnement appliqués au moteur.

Les paramètres possibles ne se limitent pas à la liste d'exemples précédente. Le procédé est adapté à fonctionner avec tous les paramètres pouvant être associés au débit. La régulation sera d'autant plus précise que le nombre de paramètres pris en compte sera important.

Selon la figure 1, une variation des paramètres appliqués au moteur implique que le déphasage mesuré ne correspond plus au débit qui aurait été obtenu dans des conditions nominales de fonctionnement. Ceci provoque des changements de vitesse pour des valeurs de débit qui ne sont plus les seuils Q1 ou Q2. Sur la figure 1, les changements de vitesse se produisent avant ou après ces seuils, ce qui dégrade la charge hydraulique procurée. Une correction du déphasage en prenant en compte les paramètres réels de fonctionnement du moteur permet d'adapter la valeur du critère de changement de vitesse aux valeurs des seuils Q1 et Q2 alors même que les paramètres de fonctionnement appliqués au moteur sont variables. La nouvelle valeur du critère (qui est par exemple le déphasage) est associée aux valeurs des seuils Q1 et Q2.

Le procédé comprend une étape dans laquelle la valeur nominale du critère de changement de vitesse est déterminée dans le cadre des conditions nominales de fonctionnement du moteur. Il s'agit d'une étape de calibrage prédéfinissant les conditions nominales de fonctionnement du moteur. Les conditions nominales de fonctionnement du moteur peuvent, par exemple, être de 230 volts pour la tension, 50 hertz pour la fréquence et 50 degrés Celsius pour la température.

Une étape suivante est l'acquisition des paramètres effectivement appliqués au moteur de manière à adapter les valeurs du critère de changement de vitesse. La variation de la tension nominale de 230V peut être de +/- 10% et la variation de la fréquence de 50Hz peut être de +/- 5%. La température du moteur varie selon les conditions d'utilisation du moteur.

L'étape suivante est le calcul d'un terme correctif à ajouter au critère de changement de vitesse, le terme correctif étant dépendant des paramètres appliqués au moteur. A titre d'exemple, en considérant une correction qui prend en compte la tension, la fréquence et la température, l'expression mathématique du calcul d'un seuil corrigé peut être :

$$phi(U,T,F) = phi(U0,T0,F0) + F1(U) + F2(T) + F3(F) + F4(U,T,F)$$

où phi(U,T,F) désigne le déphasage en fonction de la tension, la fréquence et la température, effectivement appliquées au moteur ;

où phi(U0,T0,F0) désigne le déphasage en fonction de U0, T0 et F0 qui représentent la valeur nominale de la tension, de la température et de la fréquence

où Fi (avec i un entier) est la famille de fonctions définies en fonction du comportement du moteur et modélisant la variation du déphasage par rapport aux paramètres.

Le nouveau critère de changement de vitesse de fonctionnement permet de s'adapter aux seuils pour lesquels le moteur doit changer de vitesse de fonctionnement. Le critère de changement de vitesse est modifié en ajoutant le terme correctif à la valeur nominale déterminée dans une étape précédente.

Le procédé comprend enfin une étape de pilotage de la vitesse de fonctionnement du moteur en fonction du nouveau critère de changement de vitesse de fonctionnement.

La correction du critère de changement de vitesse peut être réalisée selon des intervalles réguliers ou aussitôt que la variation d'un paramètre de fonctionnement au-delà d'une limite est détectée.

Un tel procédé peut être appliqué à des unités de régulation existantes.


**Revendications**

1. Un procédé de régulation d'un moteur (30) ayant plusieurs vitesses de fonctionnement, la vitesse de fonctionnement étant déterminée selon un critère de changement de vitesse,
le procédé comprenant une étape de correction du critère de changement de vitesse en fonction des trois paramètres que sont la tension, la température et la fréquence appliquées au moteur.

2. Le procédé selon la revendication 1, comprenant, avant l'étape de correction, une étape de détermination de la valeur nominale du critère de changement de vitesse dans des conditions nominales de fonctionnement du moteur (30).

3. Le procédé selon la revendication 2, dans lequel l'étape de correction est réalisée par adjonction à la valeur nominale du critère de changement de vitesse d'un terme correctif qui est dépendant de la tension, de la température et de la fréquence appliquées au moteur (30).

**4.** Le procédé selon l'une des revendications 1 à 3, dans lequel le critère de changement de vitesse est le déphasage entre la tension et le courant d'alimentation du moteur (30).

**5.** Le procédé selon l'une des revendications 1 à 4, comprenant une étape d'acquisition de la tension, de la température et de la fréquence appliquées au moteur (30).

**6.** Le procédé selon la revendication 5, le moteur (30) comprenant une phase principale, l'acquisition de la tension étant réalisée aux bornes de la phase principale.

**7.** Le procédé selon l'une des revendications 1 à 6, le moteur (30) comportant un boîtier de commande du moteur, l'acquisition de la température étant réalisée dans le boîtier de commande.

**8.** Le procédé selon l'une des revendications 1 à 7, le moteur (30) comprenant une phase principale et une phase auxiliaire, le procédé comprenant une étape de régulation de la vitesse du moteur (30) par branchement de la phase principale en série avec tout ou partie de la phase auxiliaire.

**9.** Un dispositif de régulation de la vitesse de fonctionnement d'un moteur (30) comprenant une unité de régulation (31) de la vitesse du moteur (30) en fonction d'un critère de changement de vitesse corrigé en fonction de la tension, de la température et de la fréquence appliquées au moteur (30).

**10.** Le dispositif selon la revendication 9, comprenant en outre des modules d'acquisition de la température, de la fréquence et de la tension appliquées au moteur (30).

**11.** Le dispositif selon la revendication 9 ou 10, dans lequel le module d'acquisition de température comprend une résistance variable en fonction de la température.

**12.** Un moteur (30) comprenant le dispositif de régulation selon l'une des revendications 9 à 11.

**13.** Le moteur (30) selon la revendication 12, comprenant un boîtier de commande dans lequel est le dispositif de régulation, le module d'acquisition de la température étant adapté à mesurer la température dans le boîtier de commande.

**14.** Le moteur (30) selon la revendication 12 ou 13, le moteur (30) comprenant en outre une phase principale, le module d'acquisition de la tension étant adapté à mesurer la tension aux bornes de la phase principale ou la tension du réseau de distribution électrique.

**15.** Une pompe de circulation comprenant le moteur (30) selon l'une des revendications 12 à 14.


**Patentansprüche**

**1.** Verfahren zur Regulierung eines Motors (30), der mehrere Funktionsdrehzahlen hat, wobei die Funktionsdrehzahl gemäß einem Drehzahlwechselkriterium bestimmt wird,
wobei das Verfahren einen Korrekturschritt des Drehzahlwechselkriteriums in Abhängigkeit von drei Parametern umfasst, nämlich die Spannung, die Temperatur und die Frequenz, die an den Motor angelegt werden.

**2.** Verfahren nach Anspruch 1, das vor dem Korrekturschritt einen Schritt des Bestimmens des Nennwerts des Drehzahlwechselkriteriums unter Nennbetriebsbedingungen des Motors (30) umfasst.

**3.** Verfahren nach Anspruch 2, bei dem der Korrekturschritt durch Hinzufügen zu dem Nennwert des Drehzahlwechselkriteriums eines Korrekturglieds, das von der Spannung, der Temperatur und der Frequenz, die an den Motor (30) angelegt werden, abhängt, ausgeführt wird.

**4.** Verfahren nach einem der Ansprüche 1 bis 3, bei dem das Drehzahlwechselkriterium die Phasenverschiebung zwischen der Spannung und dem Versorgungsstrom des Motors (30) ist.

**5.** Verfahren nach einem der Ansprüche 1 bis 4, das einen Schritt des Erfassens der Spannung, der Temperatur und der Frequenz, die an den Motor (30) angelegt werden, umfasst.

**6.** Verfahren nach Anspruch 5, wobei der Motor (30) eine Hauptphase umfasst, wobei das Erfassen der Spannung an den Klemmen der Hauptphase erfolgt.

**7.** Verfahren nach einem der Ansprüche 1 bis 6, wobei der Motor (30) ein Steuergehäuse des Motors umfasst, wobei das Erfassen der Temperatur in dem Steuergehäuse erfolgt.

**8.** Verfahren nach einem der Ansprüche 1 bis 7, wobei der Motor (30) eine Hauptphase und eine Nebenphase umfasst, wobei das Verfahren einen Schritt der Regulierung der Drehzahl des Motors (30) durch Anschließen der Hauptphase in Serie mit der gesamten oder einem Teil der Nebenphase umfasst.

**9.** Vorrichtung zum Regulieren der Betriebsdrehzahl eines Motors (30), das eine Regulierungseinheit (31) der Drehzahl des Motors (30) in Abhängigkeit von einem Drehzahlwechselkriterium, das in Abhängigkeit von der Spannung, der Temperatur und der Frequenz, die an den Motor (30) angelegt werden, korrigiert wird, umfasst.

**10.** Vorrichtung nach Anspruch 9, die ferner Module zum Erfassen der Temperatur, der Frequenz und der Spannung, die an den Motor (30) angelegt werden, umfasst.

**11.** Vorrichtung nach Anspruch 9 oder 10, bei der das Temperaturerfassungsmodul einen in Abhängigkeit von der Temperatur variablen Widerstand umfasst.

**12.** Motor (30), der die Regulierungsvorrichtung nach einem der Ansprüche 9 bis 11 umfasst.

**13.** Motor (30) nach Anspruch 12, der ein Steuergehäuse umfasst, in dem sich die Regulierungsvorrichtung befindet, wobei das Erfassungsmodul der Temperatur angepasst ist, um die Temperatur in dem Steuergehäuse zu messen.

**14.** Motor (30) nach Anspruch 12 oder 13, wobei der Motor (30) außerdem eine Hauptphase umfasst, wobei das Erfassungsmodul der Spannung angepasst ist, um die Spannung an den Klemmen der Hauptphase oder die Spannung des Stromnetzes zu messen.

**15.** Umwälzpumpe, die einen Motor (30) nach einem der Ansprüche 12 bis 14 umfasst.


**Claims**

**1.** A method for regulating a motor (30) having a plurality of operating speeds, operating speed being determined in accordance with a speed change criterion,
the method comprising a step of correcting the speed change criterion based on three parameters which are the voltage, temperature and the frequency applied to the motor.

**2.** The method according to claim 1, comprising, before the correction step, a step of determining the nominal value of the speed change criterion under nominal operating conditions of the motor (30).

**3.** The method according to claim 2, wherein the correcting step is performed by adding to the nominal value of the speed change criterion a correcting term which is dependent on the voltage, temperature and frequency applied to the motor (30).

**4.** The method according to one of claims 1 to 3, wherein the speed change criterion is the phase shift between the motor supply voltage and current (30).

**5.** The method according to one of claims 1 to 4, comprising a step of acquiring the voltage, temperature and frequency applied to the motor (30).

**6.** The method according to claim 5, the motor (30) having a main phase, acquisition of voltage being performed at the terminals of the main phase.

**7.** The method according to one of claims 1 to 6, the motor (30) having a control unit for the motor, acquisition of temperature being performed in the control unit.

8. The method according to one of claims 1 to 7, the motor (30) comprising a main phase and an auxiliary phase, the method comprising a step of regulating the speed of the motor (30) by connection of the main phase in series with all or part of the auxiliary phase.

9. Apparatus for regulating the operating speed of a motor (30) comprising a control unit (31) for the speed of the motor (30) based on a speed change criterion corrected for voltage, temperature and frequency applied to the motor (30).

10. The apparatus of claim 9 further comprising acquisition modules for the temperature, frequency and voltage applied to the motor (30).

11. The apparatus of claim 9 or 10, wherein the temperature acquisition module comprises a temperature-dependent variable resistance.

12. A motor (30) comprising the regulation apparatus according to one of claims 9 to 11.

13. The motor (30) according to claim 12, comprising a control box in which is the regulation apparatus, the temperature acquisition module being adapted to measure the temperature in the control box.

14. The motor (30) according to claim 12 or 13, the motor (30) further comprising a main phase, the voltage acquisition module being adapted to measure the voltage across the main phase or the power distribution network voltage.

15. A circulation pump comprising the motor (30) according to one of claims 12 to 14.

**Fig. 1**

**Fig. 2**

**RÉFÉRENCES CITÉES DANS LA DESCRIPTION**

**Documents brevets cités dans la description**

- FR 2524578 A
- JP 11311196 A
- EP 0629037 A
- JP 2007037292 A